# EUROPEAN PATENT SPECIFICATION

(11) **EP 2 407 509 B1**
(45) Date of publication and mention of the grant of the patent: **09.07.2014**
(21) Application number: 09841301.6
(22) Date of filing: 30.07.2009
(51) Int. Cl.: C08L 25/10, C08L 53/02, C08K 5/01, C08K 5/14, C08L 17/00, B29C 45/17, B29B 7/28, C08L 9/06, B29B 9/00

(54) **CROSSLINKABLE RUBBER COMPOSITION, USES THEREOF, RUBBER GRANULES MADE OF THE SAME, AND METHODS OF PREPARATION AND INJECTION FORMING METHODS OF THE RUBBER GRANULES**
VERNETZBARE KAUTSCHUKZUSAMMENSETZUNG, VERWENDUNGEN DAVON, DARAUS HERGESTELLTES KAUTSCHUKGRANULAT UND HERSTELLUNGSVERFAHREN UND SPRITZFORMVERFAHREN FÜR DAS KAUTSCHUKGRANULAT
COMPOSITION DE CAOUTCHOUC RÉTICULABLE, UTILISATIONS DE CETTE COMPOSITION, GRANULÉS DE CAOUTCHOUC FORMÉS À PARTIR DE CETTE DERNIÈRE ET PROCÉDÉS DE PRÉPARATION ET PROCÉDÉS DE FORMAGE PAR INJECTION DESDITS GRANULÉS DE CAOUTCHOUC

(30) Priority: 10.03.2009 CN 200910047435; 26.06.2009 CN 200910150291
(43) Date of publication of application: 18.01.2012
(73) Proprietor: Shanghai DRB&Tafu Industry Co., Ltd, Shanghai 201600 (CN)
(72) Inventor: YE, Sunyong, Wenzhou, Zhejiang 325000 (CN)
(74) Representative: Winter, Brandl, Fürniss, Hübner, Röss, Kaiser, Polte - Partnerschaft
(86) International application number: PCT/CN2009/000850
(87) International publication number: WO 2010/102432

(56) References cited:
- EP-A1- 0 410 888
- EP-A1- 1 477 522
- WO-A1-2008/083451
- CN-A- 1 916 055
- US-A- 4 238 383
- US-A1- 2005 148 727
- ZHAO HONGLEI ET AL.: 'Advances on Development of SBR Thermoplastic Elastomers' CHINESE JOURNAL OF TROPICAL AGRICULTURE vol. 27, no. 6, December 2007, pages 54 - 58, XP008166769

## Description

### FIELD OF THE INVENTION

The present invention, belonging to the rubber manufacturing technical field, relates to a rubber composition, and particularly to a vulcanizible rubber composition that can be kept at room temperature over a long period of time as well as the rubber grains therefrom.

### BACKGROUND OF THE INVENTION

Rubber is an important macromolecular elastomer material, and considerably used in various products, such as tires, shoe soles, seal rings, and various protection devices. The materials used for various products are required to be good in abrasion resistance, flex resistance, water/oil resistance, and heat/cold resistance, high in flexibility and tear strength, and also low in the cost, with a complicated forming process. Various rubber products are mainly made from combination of the following various rubber materials: Natural rubber, isoprene rubber, butadiene rubber, styrene butadiene rubber, nitrile butadiene rubber, neoprene rubber, ethylene propylene terpolymer rubber, and so on. Various traditional rubber materials, being high in molecular weight and poor in fluidity, can be formed only by compression molding. Besides, steam heating is adopted in the vulcanized process of rubber for improving uniformity of the mold temperature; however, this process requires a complicated and expensive high pressure boiler, which is high in equipment investment and energy consumption. The traditional rubber has a high molecular weight and a high level of entanglement among the molecules thereof, which makes the rubber generate a great deal of heat in the process of open mixing or internal mixing; besides, the heat is not easy to be dissipated, making the stock incline to be vulcanized partly, thus making the products after compression molding have defects. Moreover, the stock that is vulcanized with the traditional sulphur may be self-vulcanized at a slightly higher environmental temperature, and thus cannot be stored over a long period of time; a low temperature environment is needed if a long-term storage is desired. It is because of various shortcomings of the traditional rubber that the thermoplastic elastomer is produced, the main of which is styrene series of elastomer. The styrene series of elastomer can be formed by injection molding through a simple manufacturing process and recovered, and is thus fully developed; however, since the styrene series of elastomer keeps the mechanical properties only through physical junctions, it cannot satisfy the requirements of some products for high performance (such as high abrasion resistance, or high tear strength). Furthermore, the styrene series of thermoplastic elastomer is very difficult to effect effective chemical crosslinking, because the styrene series of thermoplastic elastomer is a block copolymer of various segments with different difficulty level of crosslinking, which makes crosslinking nonuniform.

### SUMMARY OF THE INVENTION

For overcoming the various shortcomings of the existing rubber materials and their processes, a purpose of the present invention is to provide a crosslinkable rubber composition, the use thereof, the rubber grains therefrom, and a method for preparing and injection molding the rubber grains, and to allow the rubber composition and the rubber grains to be formed directly by injection molding; besides, the rubber grains will not be self-vulcanized at a temperature below 80°C, and can be kept at a temperature of 30 °C over a long period of time, having no need for low-temperture storage.

The following technical solution is adopted to achieve the purpose of the present invention and to solve the technical problems to be solved therein. A crosslinkable rubber composition presented according to the present invention comprises the following components: 40-70 wt.% of styrene butadiene copolymers, 9.5-30 wt.% of flow modifiers, 10-50 wt.% of softening oil, and 0.1-1 wt.% of vulcanizing agents.

The following technical means can also be adopted to further achieve the purpose of the present invention and solve the technical problems to be solved therein.

In the rubber composition as described above, the styrene butadiene copolymer has a linear or multiple-arm star-shaped molecular structure, the molecular chain structure being a completely atactic copolymer structure of styrenic monomers and diene monomers or an alternating micro-block structure formed by the multiple block copolymerization of styrenic monomers and diene monomers, content of the 1,2-structure in the diene structure being 10-40%; the molecular structural formula of the styrene butadiene copolymer is -(PS_{X}-PB_{Y})ₙ- or (-(PS_{X}-PB_{Y})ₙ)_{M}R, with the former being of a linear structure while the latter of a multiple-arm star-shaped structure, where PS is a styrenic polymer, PB a diene polymer, R the "core" of the star-shaped structure, X a positive integer in the range of 1-300, Y a positive integer in the range of 1-2000, n a positive integer in the range of 10-3000, and M a positive integer in the range of 3-20; the weight percent content of the styrenic monomer in this styrene butadiene copolymer is 5-80%, with molecular weight of the copolymer being 40000-500000.

ln the rubber composition as described above, the flow modifier thereof is selected from at least one of styrene-butadiene-styrene copolymer, styrene-ethylene-butene-styrene copolymer and styrene-ethylene-propylene-styrene copolymer and is different from the styrene butadiene copolymer.

In the rubber composition as described above, the softening oil thereof can be selected from at least one of naphthenic oil, alkane oil and aromatic hydrocarbon oil.

In the rubber composition as described above, the vulcanizing agent thereof can be selected from benzoyl peroxide, bis(para-benzoyl peroxide), di-tert-butyl peroxide, dicumyl peroxide and cumene hydroperoxide.

A rubber composition as described above further includes a processing assistant, which is selected from one or more of the following group consisting of a vulcanization accelerator, an aging inhibitor, a mold releasing agent, a reinforcing agent, a flame retardant, a thickening agent, and a detackifier.

The present invention provides a rubber product, which includes the rubber composition as described above.

The present invention further provides a crosslinkable rubber grain, which is made of the rubber composition as described above.

The rubber grains as described above are suitable for injection molding or extrusion molding. These rubber grains will not crosslink at a temperature below 80°C.

The process for preparing the crosslinkable rubber grains as described above can be selected from the following three processes:

A first process for preparing the rubber grains: First the styrene butadiene copolymer, the flow modifier and the softening oil in a certain ratio are simultaneously put into an internal mixer to be internally mixed for 10-30 minutes, and then the vulcanizing agent is added and mixed for 3-10 minutes, with the temperature of the internal mixer being 60-120°C; the stock after internal mixing is mixed in an open mixer; tight-milled for 2-20 times before being rolled and sheeted; finally the stock is extruded and pelletized by an extruder at a temperature of 60-110°C, and then goes through air circulation cutting or water circulation cutting to get the grains.

A second process for preparing the rubber grains: First the flow modifier and the softening oil in a certain ratio are put into an internal mixer to be internally mixed for 5-15 minutes, then the styrene butadiene copolymer is added and mixed for 5-15 minutes; the vulcanizing agent is added and mixed for 3-10 minutes, with the temperature of the internal mixer being 60-120°C; the stock after internal mixing is mixed in the open mixer; tight-milled for 2-20 times before being rolled and sheeted; and finally the stock is extruded and pelletized by an extruder at a temperature of 60-110°C, and then goes through air circulation cutting or water circulation cutting to get the grains.

A third process for preparing the rubber grains: First the styrene butadiene copolymer, the flow modifier and the softening oil in a certain ratio are simultaneously put into an internal mixer to be internally mixed for 8-30 minutes, with the temperature of the internal mixer being 100-160°C; then the stock after internal mixing is sheeted in the open mixer and, with the vulcanizing agent added, tight-milled for 10-30 times before being rolled and sheeted; and finally the stock is extruded and pelletized by an extruder at a temperature of 60-110°C, and then goes through air circulation cutting or water circulation cutting to get the grains.

In the preparation process, various processing assistants can be added as required by different products, such as a reaction promotor, a vulcanization accelerator, a vulcanization promotion assistant, an antioxidant, an anti-ultraviolet agent, a foaming agent, an aging inhibitor, a heat stabilizer, a light stabilizer, an ozone stabilizer, a processing aid, a plasticizer, a thickening agent, a blowing agent, dye, pigment, wax, an extender, an organic acid, a polymerization inhibitor, a metal oxide, and an activator such as triethanolamine, polyglycol, hexanetriol and so on, which are known in rubber industry. These rubber assistants are used at a normal dosage, which is especially dependent on the expected use. The normal dosage is for example 0.1 wt% to 50 wt% as required by rubber.

The present invention further provides a molded rubber product, which is made of the rubber grains as described above by injection molding.

The molded rubber product as described above is made by means of the injection molding method.

The molded rubber product as described above is preferably a shoe sole.

By adopting the technical solution as described above, the present invention has at least the following advantages and beneficial effects:
1. The rubber composition and rubber grains according to the present invention use the styrene butadiene copolymer whose molecular chain structure is composed of mixed atactic and block segments. Since this copolymer has a low molecular weight, the material is good in fluidity; besides, with the part block structure, the material can still have good mechanical properties at a low molecular weight; furthermore, the micro-block structure will not affect the vulcanization uniformity and can make the material have good mechanical properties even with minor vulcanizing agent, therefore the semi-vulcanized material is easy to be desulfurized and recovered.
2. The rubber composition and rubber grains according to the present invention use the peroxide vulcanizing agent, and allow after vulcanization, with the vulcanization rate easy to be controlled and the vulcanization uniform; besides, the rubber grains will not be self-vulcanized at a temperature below 140°C, and can be kept at room temperature over a long period of time, having no need for low-temperature storage.
3. The rubber composition and rubber grains according to the present invention are provided with the reclaimed material, which can effectively lower the cost. Moreover, the reclaimed material, being semi-desulfurized, exists in the form of tiny rubber grains after being mixed with the rubber, which can effectively intensify and flexibilize the rubber.

What described above is only a summary of the technical solution of the present invention. Detailed description will be given in the following with reference to preferred embodiments so as to make the technical means of the present invention more clear to be understood that the technical means can be executed according to contents of the specification, and to make the purposes, features and advantages of the present invention as described above and elsewhere more obvious and easier to be understood.

### DETAILED DESCRIPTION OF THE EMBODIMENTS

For further description of the technical means adopted in the present invention for achieving the intended purpose of the present invention as well as the effects, the crosslinkable rubber composition presented in the present invention, the use thereof, the rubber grains therefrom, and the method for preparing and injection molding the rubber grains will be described in detail in the following with reference to preferred embodiments in regard to the specific embodiments, steps, features and the effects thereof.

A first crosslinkable rubber composition according to the present invention comprises the following components: 40-70 wt.% of styrene butadiene copolymers, 9.5-30 wt.% of flow modifiers, 10-50 wt.% of softening oil, and 0.1-1 wt.% of vulcanizing agents.

A second crosslinkable rubber composition according to the present invention comprises the following components: 40-70 wt.% of styrene butadiene copolymers, 9.5-30 wt.% of flow modifiers, 10-50 wt.% of softening oil, 0.1-1 wt.% of vulcanizing agents, and 1 to 30 phr of auxiliary loading materials.

The above components will be described in detail as follows:

The styrene butadiene copolymer as described above has a linear or multiple-arm star-shaped molecular structure, the molecular chain structure being a completely atactic copolymer structure of styrenic monomers and diene monomers or an alternating micro-block structure formed by the multiple block copolymerization of styrenic monomers and diene monomers, content of the 1,2-structure in the diene structure being 10-40%; the molecular structural formula of the styrene butadiene copolymer is -(PS_{X}-PB_{Y})ₙ- or (-(PS_{X}-PB_{Y})ₙ)_{M}R, with the former being of a linear structure while the latter of a multiple-arm star-shaped structure, where PS is a styrenic polymer, PB a diene polymer, R the "core" of the star-shaped structure, X a positive integer in the range of 1-300, Y a positive integer in the range of 1-2000, n a positive integer in the range of 10-3000, and M a positive integer in the range of 3-20; weight percent content of the styrenic monomer in this styrene butadiene copolymer is 5-80%, with molecular weight of the copolymer being 40000-500000.

The flow modifier as described above can be selected from at least one of styrene-butadiene-styrene copolymer, styrene-ethylene-butene-styrene copolymer and styrene-ethylene-propylene-styrene copolymer.

The softening oil for rubber as described above can be selected from naphthenic oil, alkane oil and aromatic hydrocarbon oil.

The vulcanizing agent as described above can be selected from one of the following groups consisting of benzoyl peroxide, bis(para-benzoyl peroxide), di-tert-butyl peroxide, dicumyl peroxide and cumene hydroperoxide. Dicumyl peroxide is preferred.

The auxiliary loading material as described above is preferred to be reclaimed material, such as reclaimed rubber, reclaimed PE material, reclaimed EVA material and reclaimed PP material. The auxiliary loading material can also be natural or synthetic rubber, low density polyethylene (PE), ethylene-vinyl acetate copolymer (EVA) and polypropylene (PP).

Moreover, according to intended uses, the crosslinkable rubber composition of the present invention can be provided with auxiliary assistants that have been known so far, so long as they will not exert a disadvantageous influence on the purposes of the present invention.

The auxiliary assistants, such as a vulcanization accelerator, an aging inhibitor, a mold releasing agent, a reinforcing agent, an anti-ultraviolet agent, a flame retardant, a thickening agent, a detackifier, a crosslinking assistant, a colorant, a dispersant, an antioxidant, a conductive material and so on, are known in rubber industry. These auxiliary assistants are used at a normal dosage, which is especially dependent on the expected use. The normal dosage is for example 0.1 wt% to 50 wt% as required by the rubber.

The reinforcing agent is used for intensifying the mechanical properties of the crosslinked rubber, such as tensile strength, tear strength and abrasion resistance. The examples of the intensifier for rubber include such carbon black as SRF, GPF, FEF, HAF, ISAF, SAF, FT and MT, the carbon black that receives surface treatment with the silane coupling agent, fine powders of silicic acid, and silicon dioxide. The examples of the silicon dioxide include pyrolytic silicon dioxide and precipitated silicon dioxide.

The crosslinkable rubber composition according to the present invention can be used for manufacturing household rubber products, industrial rubber products and medical rubber products.

The household rubber products include for example raincoats, shoes or gloves.

The industrial rubber products include for example a rubber vibration isolator for automobiles, a rubber vibration isolator for railroads, a rubber vibration isolator for industrial devices, or an earthquake resisting rubber for buildings. The rubber vibration isolator for automobiles includes an engine mounting pad, a pulley absorber, a carburetor mounting pad, a torsional vibration damper, a strut mounting pad, a rubber bush, a snubber rubber, an auxiliary rubber, a spring piece, a shock damper, an air spring, an automobile body mounting pad, a bumper guard, a muffler support, a rubber coupling, a rubber clutch pad, a muffler mounting pad, a sliding bush, a cushion strut bar, a brake, a handbrake, a heat radiator support and a muffler hanger. The rubber vibration isolator for railroads includes a pavement pad, a ballast pad or a rail pad. The rubber vibration isolator for industrial devices incudes for example an expansion joint, a flexible joint, a sleeve or a mounting pad.

The industrial rubber products include for example an automobile sealing strip, e.g. a car door sealing strip, a back door sealing strip, a trunk sealing strip, a side sealing strip on top, a sliding door sealing strip, a duct sealing strip, a sliding circular panel sealing strip, a front window sealing strip, a rear window sealing strip, a quarter window sealing strip, a pillar sealing strip, an outside door glass sealing strip, an inside door glass sealing strip, a windshield, a glass sliding track, an outside rear view mirror support, a closed headlight and a closed front upper panel.

The industrial rubber products include for example rubber hoses, which include liquid hoses and gas hoses.

The medical rubber products include for example syringe tubes, hoses, and infusion tubes.

The crosslinkable rubber grains according to the present invention are made of the rubber composition as described above and suitable for injection molding or extrusion molding, and will not crosslink at a temperature below 140°C.

The present invention will further be explained with reference to the following examples.

### Example 1:

A first method for preparing the rubber grains:

The rubber grains are prepared with the following components according to the following ratios :

| | |
|---|---|
| Styrene butadiene copolymer | 70 wt.% |
| Styrene-ethylene-butene-styrene block copolymer | 10 wt.% |
| Naphthenic oil | 19.9 wt.% |
| Dicumyl peroxide | 0.1 wt.% |

There are the following preparation steps: First the styrene butadiene copolymer, the styrene-ethylene-butene-styrene block copolymer and the naphthenic oil in the above ratio are simultaneously put into an internal mixer to be internally mixed for 10 minutes; then the dicumyl peroxide is added and mixed for 3 minutes, with the temperature of the internal mixer being 100°C; the stock after internal mixing is mixed in an open mixer, and tight-milled for 2 times before being rolled and sheeted; and finally the stock is extruded and pelletized by an extruder at a temperature of 70°C, and then goes through air circulation cutting to get the rubber grains of the first example.

### Example 2

A second method for preparing the rubber grains:

The rubber grains are prepared with the following components according to the following ratios :

| | |
|---|---|
| Styrene butadiene copolymer | 40 wt.% |
| Styrene-ethylene-butene-styrene block copolymer | 20 wt.% |
| Reclaimed rubber | 20 wt.% |
| Aromatic hydrocarbon oil | 19.5 wt.% |
| Dicumyl peroxide | 0.5 wt.% |

There are the following preparation steps: First the styrene-ethylene-butene-styrene block copolymer and the aromatic hydrocarbon oil in the above ratio are put into an internal mixer to be internally mixed for 5 minutes; then the styrene butadiene copolymer and the reclaimed rubber are added and mixed for 10 minutes; then the dicumyl peroxide is added and mixed for 5 minutes, with the temperature of the internal mixer being 80°C; the stock after internal mixing is mixed in an open mixer, and tight-milled for 5 times before being rolled and sheeted; and finally the stock is extruded and pelletized by an extruder at a temperature of 60°C, and then goes through air circulation cutting to get the rubber grains of the second example.

### Example 3

A third method for preparing the rubber grains:

The rubber grains are prepared with the following components according to the following ratios :

| | |
|---|---|
| Styrene butadiene copolymer | 60 wt.% |
| Styrene-ethylene-butene-styrene block copolymer | 10 wt.% |
| Reclaimed PP | 10 wt.% |
| Naphthenic oil | 19 wt.% |
| Dicumyl peroxide | 1 wt.% |

There are the following preparation steps: First the styrene butadiene copolymer, the styrene-ethylene-butene-styrene block copolymer, the reclaimed PP and the naphthenic oil in the above ratio are simultaneously put into an internal mixer to be internally mixed for 20 minutes, with the temperature of the internal mixer being 160°C;then the stock after internal mixing is sheeted in the open mixer and, with the dicumyl peroxide added, tight-milled for 30 times before being rolled and sheeted; and finally the stock is extruded and pelletized by an extruder at a temperature of 110°C, and then goes through water circulation cutting to get the rubber grains of the third example.

### Example 4

A fourth method for preparing the rubber grains:

The rubber grains are prepared with the following components according to the following ratios :

| | |
|---|---|
| Styrene butadiene copolymer | 55 wt.% |
| Styrene-ethylene-butene-styrene block copolymer | 15 wt.% |
| Naphthenic oil | 29.7 wt.% |
| Dicumyl peroxide | 0.3 wt.% |

There are the following preparation steps: First the styrene butadiene copolymer, the styrene-ethylene-butene-styrene block copolymer and the naphthenic oil in the above ratio are simultaneously put into an internal mixer to be internally mixed for 10 minutes; then the dicumyl peroxide is added and mixed for 3 minutes, with the temperature of the internal mixer being 100°C; the stock after internal mixing is mixed in an open mixer, and tight-milled for 10 times before being rolled and sheeted; and finally the stock is extruded and pelletized by an extruder at a temperature of 70°C, and then goes through air circulation cutting to get the rubber grains of the fourth example.

### Example 5

A fifth method for preparing the rubber grains:

The rubber grains are prepared with the following components according to the following ratios :

| | |
|---|---|
| Styrene butadiene copolymer | 40 wt.% |
| Styrene-ethylene-butene-styrene block copolymer | 9.5 wt.% |
| Naphthenic oil | 50 wt.% |
| Dicumyl peroxide | 0.5 wt.% |

There are the following preparation steps: First the styrene butadiene copolymer, the styrene-ethylene-butene-styrene block copolymer and the naphthenic oil in the above ratio are simultaneously put into an internal mixer to be internally mixed for 10 minutes; then the dicumyl peroxide is added and mixed for 3 minutes, with the temperature of the internal mixer being 100°C; the stock after internal mixing is mixed in an open mixer, and tight-milled for 10 times before being rolled and sheeted; and finally the stock is extruded and pelletized by an extruder at a temperature of 70°C, and then goes through air circulation cutting to get the rubber grains of the fifth example.

In the preparation processes for each example as described above, various processing assistants can be added as required by properties of different products, such as a vulcanization accelerator, an aging inhibitor, a mold releasing agent, a reinforcing agent, a flame retardant, a thickening agent and a detackifier.

### Property test of rubber products

The rubber grains prepared in each example are formed by injection molding with an injection molding machine to produce a sheet. The mold of the injection molding machine is provided with a heating arrangement, which can keep the mold at a temperature of 100-200°C. The test data are as shown in Table 1.

**Table 1. Property test results of the rubber products made of the rubber grains of the present invention**

| Test item | Test standard | Test result | | | | |
|---|---|---|---|---|---|---|
| | | Example 1 | Example 2 | Example 3 | Example 4 | Example 5 |
| Melt index (g/10 min) | ASTM D1238 | 11.4 | 42.8 | 20.3 | 15.1 | 65 |
| Tensile strength (MPa) | ASTM D638-98 | 8.12 | 5.22 | 6.38 | 7.71 | 4.30 |
| Elongation at break (%) | ASTM D638-98 | 1953 | 1338 | 827 | 1987 | 1620 |
| Permanent compression deformation (%) | ASTM D935 | 5.3 | 7.2 | 9.6 | 6.2 | 6.5 |

| | | | | | | |
|---|---|---|---|---|---|---|
| Note: ① Conditions for testing the melt index: 200°C and 5 Kg, without a vulcanizing agent. ② Conditions for preparing the sample: the injection temperature of 70°C and the vulcanization temperature of 165°C, with the vulcanization duration of 300 seconds. | | | | | | |

It can be seen from the above test data that the melt indexes of all the rubber grains are over 10 g/10 min, indicating that fluidity of the grains fully fulfills the requirement of injection molding; all the materials have high elongation at break, indicating that the rubber after vulcanization has good tenacity; and all the materials have small permanent compression deformation, indicating that the rubber has better resilience, high flexibility and high tenacity, as well as certain strength, fully fulfilling the requirements of the rubber material.

The crosslinkable rubber grains according the present invention can be kept at a temperature of 35°C over a long period of time, having no need for low-temperature storage.

The present invention further provides methods for injection molding the rubber grains as described above.

A first injection molding method includes the following steps: These rubber grains are heated and pressurized into a turbulent stock at a temperature of 50-120°C and a pressure of 50-130 MPa; this turbulent stock is injected into the mold cavity; and the turbulent stock in this mold cavity is vulcanized at a vulcanization temperature of 140-190°C, with the vulcanization duration no longer than 10 minutes.

A second injection molding method includes the following steps: Three kinds of rubber grains with different ratios are heated and pressurized into three kinds of turbulent stocks, respectively, at a temperature of 50-120°C and a pressure of 50-130 MPa; these three kinds of turbulent stocks with different ratios are injected into three noncommunicating mold cavities, respectively; then the early vulcanization is performed to vulcanize the turbulent stocks in these three noncommunicating mold cavities at a vulcanization temperature of 140-190°C and a vulcanization duration of 0-120 s; the middle moldboard among the three mold cavities is removed while the other two moldboards at both sides of the middle moldboard are buckled, making two of the three mold cavities communicate with the other mold cavity to form a complete mold cavity; and the turbulent stock in this complete mold cavity is vulcanized at a vulcanization temperature of 140-190°C and a vulcanization duration of 100-360s.

The injection molding methods as described above are designed for a single kind of rubber grains and three kinds of rubber grains, respectively. Person skilled in the art can further deduce a method of injection molding two kinds of rubber grains with different ratios. This injection molding method is similar to the second injection molding method, with the difference only in that there are two kinds of rubber grains and the corresponding mold has only two mold cavities.

The different ratios as described above can be different in the colorant, such as black rubber grains, blue rubber grains and red rubber grains. The color can also be other colors, such as yellow, green, white, purple and so on.

The second injection molding method as described above can be used to integratedly mold products of different colors.

The crosslinkable rubber grains according to the present invention can be used for preparing the molded rubber products. Further description will be made with reference to the following examples.

### Example 5 of molded rubber products

Firstly, the rubber grains are prepared according to Example 3; and
then a shoe sole is made by means of the first injection molding method. A property test is made on the shoe sole, with the results as shown in Table 2.

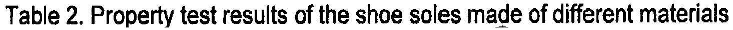

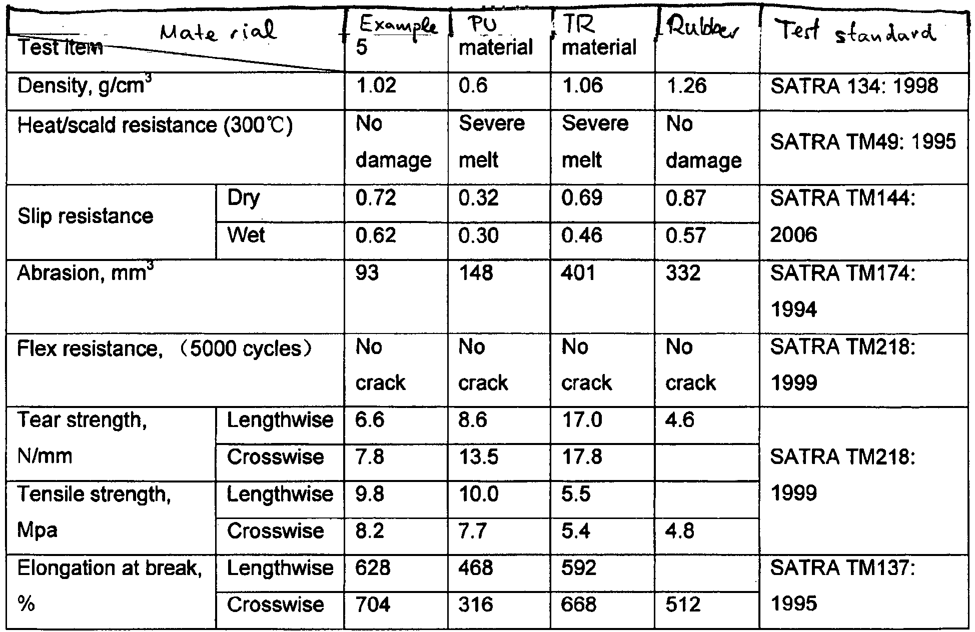

lt can be seen from the above test data that the shoe sole made by injection molding of the rubber grains of the present invention, compared with the shoe sole made of conventional materials, has higher elongation at break, tear strength and tensile strength, as well as good slip resistance and heat/scald resistance. The rubber composition and rubber grains of the present invention can fulfill the usage requirements.

What described above is rather preferred examples than restrictions on the present invention.

## Claims

1. A crosslinkable rubber composition, **characterized in that** it includes 40-70 wt.% of a styrene butadiene copolymer, 10-50 wt.% of a softening oil for rubber, 9.5-30 wt.% of a flow modifier and 0.1-1 wt.% of a peroxide vulcanizing agent, wherein
the flow modifier is different from the styrene butadiene copolymer and is selected from at least one of styrene-butadiene-styrene copolymer, styrene-ethylene-butene-styrene copolymer and styrene-ethylene-propylene-styrene copolymer.

2. The rubber composition according to claim 1, **characterized in that** the styrene butadiene copolymer thereof has a linear or multiple-arm star-shaped molecular structure, the molecular chain structure being a completely atactic copolymer structure of styrenic monomers and diene monomers or an alternating micro-block structure formed by multiple block copolymerization of the styrenic monomers and the diene monomers, content of the 1,2-structure in the diene structure being 10-40%; the molecular structural formula of the styrene butadiene copolymer is -(PS_{X}-PB_{Y})ₙ- or (-(PS_{X}-PB_{Y})ₙ)_{M}R, with the former being of a linear structure while the latter of a multiple-arm star-shaped structure, where PS is a styrenic polymer, PB a diene polymer, R a "core" of the star-shaped structure, X a positive integer in the range of 1-300, Y a positive integer in the range of 1-2000, n a positive integer in the range of 10-3000, and M a positive integer in the range of 3-20; the weight percent content of the styrenic monomer in this styrene butadiene copolymer is 5-80%, with molecular weight of the copolymer being 40000-500000.

3. The rubber composition according to claim 1 or 2, **characterized in that** the softening oil for rubber thereof is selected from at least one of naphthene oil, alkane oil and aromatic hydrocarbon oil.

4. The rubber composition according to claim 1 or 2, **characterized in that** the vulcanizing agent thereof is selected from the group consisting of benzoyl peroxide, bis(para-benzoyl peroxide), di-tert-butyl peroxide, dicumyl peroxide and cumene hydroperoxide.

5. The rubber composition according to any of claims 1-4, **characterized in that** it further includes an auxiliary assistant.

6. The rubber composition according to claim 5, **characterized in that** the auxiliary assistant thereof is selected from one or more of the group consisting of a vulcanization accelerator, an aging inhibitor, a mold releasing agent, a reinforcing agent, a flame retardant, a thickening agent and a detackifier.

7. A rubber product, **characterized in that** it is made of the rubber composition according to any of claims 1-6.

8. A crosslinkable rubber grain, **characterized in that** it comprises the rubber composition according to any of claims 1-6.

9. The rubber grain according to claim 8, **characterized in that** it is suitable for injection molding or extrusion molding.

10. The rubber grain according to claim 8, **characterized in that** it will not crosslink at a temperature below 80°C.

11. A method for preparing the rubber grain according to claim 8, **characterized in that** it includes the following steps: first the styrene butadiene copolymer, the flow modifier and the softening oil are simultaneously put into an internal mixer to be internally mixed for 10-30 minutes; then the vulcanizing agent is added and mixed for 3-10 minutes, with the temperature of the internal mixer being 60-120°C; the stock after internal mixing is mixed in an open mixer, and tight-milled for 2-20 times before being rolled and sheeted; and finally the stock is extruded and pelletized by an extruder at a temperature of 60-110°C, and then goes through air circulation cutting or water circulation cutting to get the grains.

12. A method for preparing the rubber grain according to claim 8, **characterized in that** it includes the following steps: first the flow modifier and the softening oil are put into an internal mixer to be internally mixed and mixed for 5-15 minutes; then the styrene butadiene copolymer is added and mixed for 5-15 minutes; then the vulcanizing agent is added and mixed for 3-6 minutes, with the temperature of the internal mixer being 60-120°C; the stock after internal mixing is mixed in an open mixer, and tight-milled for 2-20 times before being rolled and sheeted; and finally the stock is extruded and pelletized by an extruder at a temperature of 60-110°C, and then goes through air circulation cutting or water circulation cutting to get the grains.

13. A method for preparing the rubber grain according to claim 8, **characterized in that** it includes the following steps: first the styrene butadiene copolymer, the flow modifier and the softening oil are simultaneously put into an internal mixer to be internally mixed for 10-30 minutes, with the temperature of the internal mixer being 100-160°C; then the stock after internal mixing is mixed in an open mixer and, with the vulcanizing agent added, tight-milled for 10-20 times before being rolled and sheeted; and finally the stock is extruded and pelletized by an extruder at a temperature of 60-110°C, and then goes through air circulation cutting or water circulation cutting to get the grains.

14. A method for injection molding the rubber grain according to claim 8, **characterized in that** it includes the following steps:
the rubber grains are heated and pressurized into a turbulent stock at a temperature of 50-120°C and a pressure of 50-130 MPa;
the turbulent stock is injected into a mold cavity; and
the turbulent stock in this mold cavity is vulcanized at a vulcanization temperature of 140-190°C and a vulcanization duration of 1-10 minutes.

15. A method for injection molding the rubber grain according to claim 8, **characterized in that** it includes the following steps:
three kinds of rubber grains with different ratios are heated and pressurized into three kinds of turbulent stocks, respectively, at a temperature of 50-120°C and a pressure of 50-130 MPa;
the three kinds of turbulent stocks with different ratios are injected into three noncommunicating mold cavities, respectively;
a middle moldboard among the three mold cavities is removed while the other two moldboards at both sides of the middle moldboard are buckled, making two of the three mold cavities communicate with the other mold cavity to form a complete mold cavity; and
the turbulent stock in this complete mold cavity is vulcanized at a vulcanization temperature of 140-190°C and a vulcanization duration of 100-360 s.

16. A molded rubber product, **characterized in that** it is prepared by injection molding of the rubber grain according to claim 8.

17. The molded rubber product according to claim 16, **characterized in that** it is prepared by the injection molding method according to claim 14.

18. The molded rubber product according to claim 16, **characterized in that** it is prepared by the injection molding method according to claim 15 .

## Patentansprüche

1. Vernetzbare Kautschukzusammensetzung, **dadurch gekennzeichnet, dass** sie 40-70 Gew.-% eines Styrol-Butadien-Copolymers, 10-50 Gew.-% eines Weichmacheröls für Kautschuk, 9,5-30 Gew.-% eines Fließmodifikators und 0,1 bis 1 Gew.-% eines peroxidischen Vulkanisationsmittels enthält, wobei der Fließmodifikator anders ist als das Styrol-Butadien-Copolymer und ausgewählt ist aus wenigstens einem von Styrol-Butadien-Styrol-Copolymer, Styrol-Ethylen-Buten-Styrol-Copolymer und Styrol-Ethylen-Propylen-Styrol-Copolymer.

2. Kautschukzusammensetzung nach Anspruch 1, **dadurch gekennzeichnet, dass** das Styrol-Butadien-Copolymer eine lineare oder mehrarmig-sternförmige Molekülstruktur hat, wobei die Molekülkettenstruktur eine vollständig ataktische Copolymerstruktur aus Styrolmonomeren und Dienmonomeren oder eine durch mehrfache Block-Copolymerisation der Styrolmonomeren und der Dienmonomeren gebildete alternierende Mikro-Blockstruktur ist, wobei der Anteil der 1,2-Struktur in der Dienstruktur 10-40% beträgt; die Molekülstrukturformel des Styrol-Butadien-Copolymers -(PS_{X}-PB_{Y})ₙ oder (-(PS_{X}-PB_{Y})ₙ)_{M}R ist, wobei erstere eine lineare Struktur hat, während letztere eine mehrarmig-sternförmige Struktur hat, wobei PS ein Styrolpolymer ist, PB ein Dienpolymer ist, R ein "Kern" der sternförmigen Struktur ist, X eine positive ganze Zahl im Bereich von 1-300 ist, Y eine positive ganze Zahl im Bereich von 1-2000 ist, n eine positive ganze Zahl im Bereich von 10-3000 ist und M eine positive ganze Zahl im Bereich von 3-20 ist; der Anteil des Styrolmonomers an diesem Styrol-Butadien-Copolymer in Gewichtsprozent 5-80% ist, wobei das Molekulargewicht des Copolymers 40000-500000 beträgt.

3. Kautschukzusammensetzung nach Anspruch 1 oder 2, **dadurch gekennzeichnet, dass** das Weichmacheröl für Kautschuk ausgewählt ist aus wenigstens einem von Naphthalinöl, Alkanöl und aromatischem Kohlenwasserstofföl.

4. Kautschukzusammensetzung nach Anspruch 1 oder 2, **dadurch gekennzeichnet, dass** das Vulkanisationsmittel ausgewählt ist aus der Gruppe bestehend aus Benzoylperoxid, Di-para-benzoylperoxid, Di-tert-butylperoxid, Dicumylperoxid und Cumolhydroperoxid.

5. Kautschukzusammensetzung nach einem der Ansprüche 1 bis 4, **dadurch gekennzeichnet, dass** sie weiterhin einen Hilfsstoff enthält.

6. Kautschukzusammensetzung nach Anspruch 5, **dadurch gekennzeichnet, dass** der Hilfsstoff ausgewählt ist aus ein oder mehreren der Gruppe bestehend aus einem Vulkanisationsbeschleuniger, einem Alterungsinhibitor, einem Formtrennmittel, einem Verstärkungsmittel, einem Flammverzögerungsmittel, einem Verdickungsmittel und einem Antiklebemittel.

7. Kautschukprodukt, **dadurch gekennzeichnet, dass** es aus der Kautschukzusammensetzung nach einem der Ansprüche 1 bis 6 hergestellt ist.

8. Vernetzbares Kautschukgranulat, **dadurch gekennzeichnet, dass** es die Kautschukzusammensetzung nach einem der Ansprüche 1 bis 6 enthält.

9. Kautschukgranulat nach Anspruch 8, **dadurch gekennzeichnet, dass** es zum Spritzgießen oder Strangpressen geeignet ist.

10. Kautschukgranulat nach Anspruch 8, **dadurch gekennzeichnet, dass** es bei einer Temperatur unter 80°C nicht vernetzt.

11. Verfahren zur Herstellung des Kautschukgranulats nach Anspruch 8, **dadurch gekennzeichnet, dass** es die folgenden Schritte beinhaltet: zuerst werden das Styrol-Butadien-Copolymer, der Fließmodifikator und das Weichmacheröl zum innigen Mischen über 10-30 Minuten gleichzeitig in einen Innenmischer gegeben; dann wird das Vulkanisationsmittel zugegeben und es wird 3-10 Minuten gemischt, wobei die Temperatur des Innenmischers 60-120°C beträgt; die Rohmischung nach innigem Mischen wird in einem offenen Mischer gemischt und, bevor sie gewalzt und zu Platten gezogen wird, 2-20mal fest vermahlen; und schließlich wird die Rohmischung mit einem Extruder bei einer Temperatur von 60-110°C extrudiert und pelletiert und dann zum Erhalt des Granulats unter Luftumlauf oder Wasserumlauf geschnitten.

12. Verfahren zur Herstellung des Kautschukgranulats nach Anspruch 8, **dadurch gekennzeichnet, dass** es die folgenden Schritte beinhaltet: zuerst werden der Fließmodifikator und das Weichmacheröl zum innigen Mischen in einen Innenmischer gegeben und 5-15 Minuten lang gemischt; dann wird das Styrol-Butadien-Copolymer zugegeben und es wird 5-15 Minuten lang gemischt; dann wird das Vulkanisationsmittel zugegeben und es wird 3-6 Minuten gemischt, wobei die Temperatur des Innenmischers 60-120°C beträgt; die Rohmischung nach innigem Mischen wird in einem offenen Mischer gemischt und, bevor sie gewalzt und zu Platten gezogen wird, 2-20mal fest vermahlen; und schließlich wird die Rohmischung mit einem Extruder bei einer Temperatur von 60-110°C extrudiert und pelletiert und dann zum Erhalt des Granulats unter Luftumlauf oder Wasserumlauf geschnitten.

13. Verfahren zur Herstellung des Kautschukgranulats nach Anspruch 8, **dadurch gekennzeichnet, dass** es die folgenden Schritte beinhaltet: zuerst werden das Styrol-Butadien-Copolymer, der Fließmodifikator und das Weichmacheröl zum innigen Mischen über 10-30 Minuten gleichzeitig in einen Innenmischer gegeben, wobei die Temperatur des Innenmischers 100-160°C beträgt; dann wird die Rohmischung nach innigem Mischen in einem offenen Mischer gemischt und, wenn das Vulkanisationsmittel zugegeben ist, bevor sie gewalzt und zu Platten gezogen wird 10-20mal fest vermahlen; und schließlich wird die Rohmischung mit einem Extruder bei einer Temperatur von 60-110°C extrudiert und pelletiert und dann zum Erhalt des Granulats unter Luftumlauf oder Wasserumlauf geschnitten.

14. Verfahren zum Spritzgießen des Kautschukgranulats nach Anspruch 8, **dadurch gekennzeichnet, dass** es die folgenden Schritte beinhaltet:
das Kautschukgranulat wird zu einer turbulenten Rohmischung auf einer Temperatur von 50-120°C erhitzt und unter einen Druck von 50-130 MPa gesetzt;
die turbulente Rohmischung wird in eine Spritzgießkavität eingespritzt; und
die turbulente Rohmischung in dieser Spritzgießkavität wird mit einer Vulkanisationstemperatur von 140-190°C und einer Vulkanisationsdauer von 1-10 Minuten vulkanisiert.

15. Verfahren zum Spritzgießen des Kautschukgranulats nach Anspruch 8, **dadurch gekennzeichnet, dass** es die folgenden Schritte beinhaltet:
drei Arten von Kautschukgranulaten mit unterschiedlichen Verhältnissen werden zu den jeweiligen drei Arten turbulenter Rohmischungen auf einer Temperatur von 50-120°C erhitzt und unter einen Druck von 50-130 MPa gesetzt;
die drei Arten turbulenter Rohmischungen mit unterschiedlichen Verhältnissen werden jeweils in drei nicht-kommunizierende Spritzgießkavitäten eingespritzt;
ein mittleres Formbrett zwischen den drei Spritzgießkavitäten wird entfernt, während die anderen beiden Formbretter an beiden Seiten des mittleren Formbretts verbogen werden, so dass zwei der drei Spritzgießkavitäten mit der weiteren Spritzgießkavität unter Bildung einer ganzen Spritzgießkavität kommunizieren; und
die turbulente Rohmischung in dieser ganzen Spritzgießkavität wird mit einer Vulkanisationstemperatur von 140-190°C und einer Vulkanisationsdauer von 100-360 Sekunden vulkanisiert.

16. Geformtes Kautschukprodukt, **dadurch gekennzeichnet, dass** es durch Spritzgießen des Kautschukgranulats nach Anspruch 8 hergestellt ist.

17. Geformtes Kautschukprodukt nach Anspruch 16, **dadurch gekennzeichnet, dass** es durch das Spritzgießverfahren nach Anspruch 14 hergestellt ist.

18. Geformtes Kautschukprodukt nach Anspruch 16, **dadurch gekennzeichnet, dass** es durch das Spritzgießverfahren nach Anspruch 15 hergestellt ist.

## Revendications

1. Composition de caoutchouc réticulable, **caractérisée en ce qu'**elle comprend 40 % à 70 % en poids d'un copolymère de styrène-butadiène, 10 % à 50 % en poids d'une huile de ramollissement pour caoutchouc, 9,5 % à 30 % en poids d'un modificateur d'écoulement et 0,1 % à 1 % en poids d'un agent de vulcanisation de type peroxyde, dans laquelle
le modificateur d'écoulement est différent du copolymère de styrène-butadiène et est au moins un copolymère choisi parmi un copolymère de styrène-butadiène-styrène, un copolymère de styrène-éthylène-butène-styrène et un copolymère de styrène-éthylène-propylène-styrène.

2. Composition de caoutchouc selon la revendication 1, **caractérisée en ce que** son copolymère de styrène-butadiène possède une structure moléculaire linéaire ou en forme d'étoile à bras multiple, la structure de la chaîne moléculaire étant une structure copolymère complètement atactique de monomères styréniques et de monomères diéniques ou une structure à micro-séquences alternées formée par la copolymérisation de multiples séquences de monomères styréniques et de monomères diéniques, la teneur en structure 1,2 dans la structure diénique étant de 10 % à 40 % ; la formule structurelle moléculaire du copolymère de styrène-butadiène est -(PS_{X}-PB_{Y})ₙ- ou (-(PS_{X}-PB_{Y})ₙ)_{M}R, la première étant une structure linéaire tandis que la dernière est une structure en forme d'étoile à bras multiple, où PS est un polymère styrénique, PB est un polymère diénique, R est un « noyau » de la structure en forme d'étoile, X est un entier positif situé dans la plage allant de 1 à 300, Y est un entier positif situé dans la plage allant de 1 à 2000, n est un entier positif situé dans la plage allant de 10 à 3000 et M est un entier positif situé dans la plage allant de 3 à 20 ; la teneur en pourcentage en poids du monomère styrénique dans ce copolymère de styrène-butadiène est de 5 % à 80 %, le poids moléculaire du copolymère étant de 40 000 à 500 000.

3. Composition de caoutchouc selon la revendication 1 ou 2, **caractérisée en ce que** son huile de ramollissement pour caoutchouc est au moins une huile choisie parmi une huile de naphtène, une huile d'alcane et une huile d'hydrocarbure aromatique.

4. Composition de caoutchouc selon la revendication 1 ou 2, **caractérisée en ce que** son agent de vulcanisation est choisi dans le groupe constitué de peroxyde de benzoyle, de bis(peroxyde de para-benzoyle), de peroxyde de di-tert-butyle, de peroxyde de dicumyle et d'hydroperoxyde de cumène.

5. Composition de caoutchouc selon l'une quelconque des revendications 1 à 4, **caractérisée en ce qu'**elle comprend en outre un assistant auxiliaire.

6. Composition de caoutchouc selon la revendication 5, **caractérisée en ce que** son assistant auxiliaire est un ou plusieurs assistants auxiliaires choisis dans le groupe constitué d' un accélérateur de vulcanisation, d'un inhibiteur de vieillissement, d'un agent de démoulage, d'un agent de renforcement, d'un ignifuge, d'un agent épaississant et d'un antiadhésif.

7. Produit de caoutchouc, **caractérisé en ce qu'**il est fait de la composition de caoutchouc selon l'une quelconque des revendications 1 à 6.

8. Grain de caoutchouc réticulable, **caractérisé en ce qu'**il comprend la composition de caoutchouc selon l'une quelconque des revendications 1 à 6.

9. Grain de caoutchouc selon la revendication 8, **caractérisé en ce qu'**il est approprié pour le moulage par injection ou le moulage par extrusion.

10. Grain de caoutchouc selon la revendication 8, **caractérisé en ce qu'**il ne se réticule pas à une température inférieure à 80 °C.

11. Procédé de préparation du grain de caoutchouc selon la revendication 8, **caractérisé en ce qu'**il comprend les étapes suivantes : le copolymère de styrène-butadiène, le modificateur d'écoulement et l'huile de ramollissement sont tout d'abord simultanément introduits dans un mélangeur interne pour être mélangés de manière interne pendant 10 à 30 minutes, puis l'agent de vulcanisation est ajouté et mélangé pendant 3 à 10 minutes, la température du mélangeur interne étant de 60 °C à 120 °C ; après le mélange interne, le mélange de base est mélangé dans un mélangeur ouvert et fermement broyé 2 à 20 fois avant d'être laminé et aplati ; et, finalement, le mélange de base est extrudé et mis sous forme de granulés par une machine d'extrusion à une température de 60 °C à 110 °C, puis est soumis à une découpe par circulation d'air ou une découpe par circulation d'eau pour obtenir les grains.

12. Procédé de préparation du grain de caoutchouc selon la revendication 8, **caractérisé en ce qu'**il comprend les étapes suivantes : le modificateur d'écoulement et l'huile de ramollissement sont tout d'abord introduits dans un mélangeur interne pour être mélangés de manière interne pendant 5 à 15 minutes ; ensuite, le copolymère de styrène-butadiène est ajouté et mélangé pendant 5 à 15 minutes ; ensuite, l'agent de vulcanisation est ajouté et mélangé pendant 3 à 6 minutes, la température du mélangeur interne étant de 60 °C à 120 °C ; après le mélange interne, le mélange de base est mélangé dans un mélangeur ouvert et fermement broyé 2 à 20 fois avant d'être laminé et aplati ; et, finalement, le mélange de base est extrudé et mis sous forme de granulés par une machine d'extrusion à une température de 60 °C à 110 °C, puis est soumis à une découpe par circulation d'air ou une découpe par circulation d'eau pour obtenir les grains.

13. Procédé de préparation du grain de caoutchouc selon la revendication 8, **caractérisé en ce qu'**il comprend les étapes suivantes : le copolymère de styrène-butadiène, le modificateur d'écoulement et l'huile de ramollissement sont tout d'abord simultanément introduits dans un mélangeur interne pour être mélangés de manière interne pendant 10 à 30 minutes, la température du mélangeur interne étant de 100 °C à 160 °C ; après le mélange interne, le mélange de base est mélangé dans un mélangeur ouvert et, avec l'agent de vulcanisation ajouté, fermement broyé 10 à 20 fois avant d'être laminé et aplati ; et, finalement, le mélange de base est extrudé et mis sous forme de granulés par une machine d'extrusion à une température de 60 °C à 110 °C, puis est soumis à une découpe par circulation d'air ou une découpe par circulation d'eau pour obtenir les grains.

14. Procédé de moulage par injection du grain de caoutchouc selon la revendication 8, **caractérisé en ce qu'**il comprend les étapes suivantes :
les grains de caoutchouc sont chauffés et pressurisés dans un mélange de base turbulent à une température de 50 °C à 120 °C et sous une pression de 50 MPa à 130 MPa ;
le mélange de base turbulent est injecté dans une cavité de moule ; et
le mélange de base turbulent se trouvant dans cette cavité de moule est vulcanisé à une température de vulcanisation de 140 °C à 190 °C et pendant une durée de vulcanisation de 1 à 10 minutes.

15. Procédé de moulage par injection du grain de caoutchouc selon la revendication 8, **caractérisé en ce qu'**il comprend les étapes suivantes :
trois types de grains de caoutchouc avec différents rapports sont chauffés et pressurisés dans trois types de mélange de base turbulent, respectivement, à une température de 50 °C à 120 °C et sous une pression de 50 MPa à 130 MPa ;
les trois types de mélange de base turbulent avec différents rapports sont injectés dans trois cavités de moule non communicantes, respectivement ;
un bouclier central parmi les trois cavités de moule est retiré, tandis que les deux autres boucliers des deux côtés du bouclier central sont fixés, ce qui permet à deux des trois cavités de moule de communiquer avec l'autre cavité de moule pour former une cavité complète de moule ; et
le mélange de base turbulent se trouvant dans cette cavité complète de moule est vulcanisé à une température de vulcanisation de 140 °C à 190 °C et pendant une durée de vulcanisation de 100 à 360 secondes.

16. Produit de caoutchouc moulé, **caractérisé en ce qu'**il est préparé par moulage par injection du grain de caoutchouc selon la revendication 8.

17. Produit de caoutchouc moulé selon la revendication 16, **caractérisé en ce qu'**il est préparé par le procédé de moulage par injection selon la revendication 14.

18. Produit de caoutchouc moulé selon la revendication 16, **caractérisé en ce qu'**il est préparé par le procédé de moulage par injection selon la revendication 15.
